# EUROPEAN PATENT APPLICATION

(11) **EP 4 755 265 A1**
(43) Date of publication of application: **10.06.2026**
(21) Application number: 25221047.1
(22) Date of filing: 05.12.2025
(51) Int. Cl.: A47J 19/02

(54) **A FLUID DELIVERY DEVICE FOR AN APPLIANCE**

(30) Priority: 06.12.2024 US 202463729175 P
(71) Applicant: Whirlpool Corporation, Benton Harbor, MI 49022 (US)
(72) Inventor: Aditjandra, Antonius K., Benton Harbor 49022 (US); Armstrong, Shawn, Benton Harbor 49022 (US); Salcedo Ortega, Francisco J., Benton Harbor 49022 (US)
(74) Representative: Witte, Weller & Partner Patentanwälte mbB

(57) **Abstract**

A fluid delivery device (11) is coupled to an appliance body (12) of an appliance (10) and includes a spout (16) that defines a spout aperture (54) formed of a drip portion (56) of the spout (16) and an oblique portion (58) of the spout (16). The spout (16) also has a rear wall (53) that forms a portion of a spout interior (52) of the spout (16). An angle between the oblique portion (58) and the rear wall (53) and an angle between the oblique portion (58) and the drip portion (56) function to, at least partially, control the delivery of fluid from the appliance body (12) to a user through the spout aperture (54). Further, the spout (16) can have a rim (60) that circumscribes the spout aperture (54) and that is formed by both the oblique portion (58) and the drip portion (56). The rim (60) can define a peripheral recess (64), wherein the dimensions of the peripheral recess (64) further control the delivery of fluid from the spout aperture (54) to the user.

## Description

### BACKGROUND OF THE DISCLOSURE

The present disclosure generally relates to an appliance, and more specifically, to a fluid delivery device for an appliance that is configured to reduce undesired drippage from the appliance.

### SUMMARY OF THE DISCLOSURE

According to one aspect of the present disclosure, an appliance has an appliance body that includes a base and a reservoir removably coupled with the base and configured to receive fluid extracted from a food item by a reamer coupled with a rotatable shaft that extends from the base, and a fluid delivery device that includes a spigot coupled to the reservoir, and a spout coupled to the spigot and configured to deliver the fluid received by the reservoir that flows to the spout via the spigot, wherein the spout defines a spout interior and includes a rear wall that defines a portion of the spout interior, a front wall that defines a portion of the spout interior opposite the rear wall, and a spout aperture disposed at the distal-most portion of the spout relative to the spigot, wherein the spout aperture is formed of an oblique portion of the spout and a drip portion of the spout that cooperates with the oblique portion to form a rim of the spout, and wherein the oblique portion defines the proximal most portion of the spout aperture relative to the appliance body and the drip portion defines the distal-most portion of the spout aperture relative to the appliance body, and wherein the oblique portion extends at an oblique angle from the drip portion to control a flow of the fluid delivered from the spout via the spout aperture.

According to another aspect of the present disclosure, a cordless juicer has an appliance body that includes a base and a reservoir removably coupled with the base and configured to receive fluid extracted from a food item by a reamer coupled with a rotatable shaft that extends from the base, a battery removably coupled to the appliance body, and a fluid delivery device that includes a spigot coupled to the reservoir, and a spout coupled to the spigot and configured to control a delivery of fluid received by the reservoir that flows to the spout via the spigot, wherein the spout defines a spout aperture that is formed by an oblique portion of the spout and a drip portion of the spout, wherein an angle between the oblique portion and the drip portion is oblique.

According to another aspect of the present disclosure, a fluid delivery device configured to deliver a fluid has a spigot and a spout, wherein the spigot is configured to couple to an appliance body of an appliance to receive a fluid from the appliance body and the spout is configured to deliver the fluid from the spigot to a user via a spout aperture defined by the spout, wherein the spout aperture is formed from an oblique portion of the spout and a drip portion of the spout, wherein an angle between the oblique portion and the drip portion is between 160 degrees and 179 degrees, and wherein the spout has a rim that defines a peripheral recess that has a width that gradually decreases as the peripheral recess extends from a portion of the rim formed by the oblique portion to a portion of the rim formed by the drip portion.

The fluid delivery device of the present disclosure may provide a variety of advantages, including, but not limited to, the following. By providing a geometry that is capable of controlling the flow of a fluid through a spout interior, a spout of the fluid delivery device can substantially reduce the amount of fluid that undesirably drips from a spout aperture defined by the spout. Particularly, the geometry of the spout functions to substantially promote the passage of fluid out of the portion of the spout aperture formed by a drip portion of the spout. Consequently, a majority of the fluid that enters the spout interior passes through the portion of the spout aperture positioned furthest from an appliance body of an appliance. Accordingly, the user can utilize a receptacle that has an upwardly tapered profile, such as a mason jar, to receive fluid dispensed by the appliance, as a top opening of the receptacle can be positioned beneath the portion of the spout aperture formed by the drip portion, notwithstanding that the top opening of the receptacle is disposed inwards of an exterior of a body of the receptacle. As such, the fluid delivery device of the present disclosure can function to substantially reduce inadvertent drippage of fluid from the spout aperture, thereby reducing the cleaning time that can be required of the user and facilitating an efficient reception of fluid by the user.

These and other features, advantages, and objects of the present disclosure will be further understood and appreciated by those skilled in the art by reference to the following specifications, claims, and appended drawings.

### BRIEF DESCRIPTION OF THE DRAWINGS

In the drawings:
FIG. 1 is a side perspective view of an appliance with a fluid delivery device of the present disclosure;
FIG. 2 is a side elevational view of the fluid delivery device attached to the appliance;
FIG. 3 is a schematic view of the fluid delivery device attached to the appliance, illustrating the angled relations that, at least partially, define the geometry of the fluid delivery device;
FIG. 4 is a schematic view illustrating a peripheral recess that can be formed by a rim of a spout of the fluid delivery device; and
FIG. 5 is a partial side view of the fluid delivery device attached to the appliance of the present disclosure, showing the movement of fluid through the fluid delivery device.

The components in the figures are not necessarily to scale, emphasis instead being placed upon illustrating the principles described herein.

### DETAILED DESCRIPTION

The present illustrated embodiments reside primarily in combinations of method steps and apparatus components related to a fluid delivery device for an appliance. Accordingly, the apparatus components and method steps have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

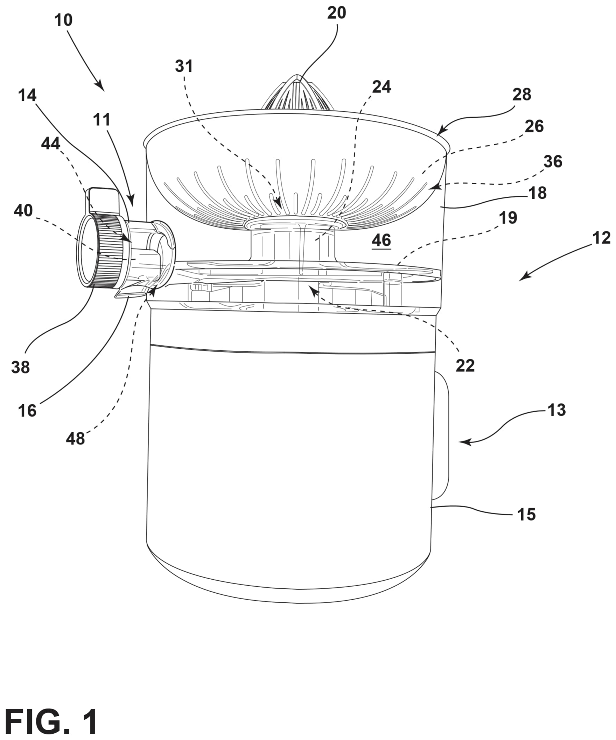

For purposes of description herein, the terms "upper," "lower," "right," "left," "rear," "front," "vertical," "horizontal," and derivatives thereof shall relate to the disclosure as oriented in FIG. 1. Unless stated otherwise, the term "front" shall refer to the surface of the element closer to an intended viewer, and the term "rear" shall refer to the surface of the element further from the intended viewer. However, it is to be understood that the disclosure may assume various alternative orientations, except where expressly specified to the contrary. It is also to be understood that the specific devices and processes illustrated in the attached drawings, and described in the following specification, are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises a . . ." does not, without more constraints, preclude the existence of additional identical elements in the process, method, article, or apparatus that comprises the element.

Referring to FIGS. 1-5, reference numeral 10 generally designates an appliance 10. The appliance 10 has an appliance body 12 that includes a base 15 and a reservoir 18 removably coupled with the base 15 and configured to receive fluid extracted from a food item by a reamer 20 coupled with a rotatable shaft 24 that extends from the base 15. The appliance 10 also has a fluid delivery device 11 that includes a spigot 14 coupled to the reservoir 18 and a spout 16 coupled to the spigot 14 and configured to deliver fluid received by the reservoir 18 that flows to the spout 16 via the spigot 14, wherein the spout 16 defines a spout interior 52. The spout 16 has a rear wall 53 that defines a portion of the spout interior 52 and a front wall 55 that defines a portion of the spout interior 52 opposite the rear wall 53, and a spout aperture 54 disposed at the distal-most portion of the spout 16 relative to the spigot 14, wherein the spout aperture 54 is formed of an oblique portion 58 of the spout 16 and a drip portion 56 of the spout 16 that cooperates with the oblique portion 58 to form a rim 60 of the spout 16. The oblique portion 58 defines the proximal-most portion of the spout aperture 54 relative to the appliance body 12, and the drip portion 56 defines the distal-most portion of the spout aperture 54 relative to the appliance body 12. The oblique portion 58 extends at an oblique angle from the drip portion 56 to control the flow of fluid delivered from the spout 16 via the spout aperture 54.

Referring now to FIG. 1, the appliance 10 may be a cordless juicer 10 configured to extract fluid from a food item, such as, but not limited to, various fruits and vegetables. The cordless juicer 10 has a fluid delivery device 11 configured to deliver fluid, particularly juice, extracted from the food item to a user of the cordless juicer 10. The cordless juicer 10 includes an appliance body 12. The appliance body 12 includes the base 15, the reservoir 18, and a sieve hub 26. The base 15 houses various electronic and mechanical systems of the cordless juicer 10. The electronic and mechanical systems are powered by a battery 13 that is removably coupled with the base 15. The reservoir 18 is removably coupled with and supported by the base 15. The reservoir 18 is configured to receive the fluid extracted from the various food items by a reamer 20 of the cordless juicer 10. The reservoir 18 includes a reservoir aperture 22, which receives a rotatable shaft 24 that extends from the base 15. The rotatable shaft 24 is coupled with the electronic and mechanical systems housed in the base 15. The reservoir 18 further includes a collection surface 19. The sieve hub 26 is positioned atop the reservoir 18 and covers a top opening 28 of the reservoir 18. The sieve hub 26 includes a sieve aperture 31 that is aligned with the reservoir aperture 22 and that is configured to receive the rotatable shaft 24. The reamer 20 is coupled with a portion of the rotatable shaft 24 that extends through the sieve aperture 31. The fluid delivery device 11 includes a spigot 14 attached to the reservoir 18 and a spout 16 that extends from and is attached to the spigot 14. With reference again to FIG. 1, in operation, a user can press a food item, such as a fruit or vegetable, against the reamer 20, which causes the electronic and mechanical systems to activate, thereby rotating the rotatable shaft 24, which, in turn rotates the reamer 20 against the food item, and results in extraction of fluid from the food item. The fluid then passes through a plurality of sieves 36 formed by the sieve hub 26 and into the reservoir 18, where the fluid accumulates against the collection surface 19. The user can then dispense the fluid from the reservoir 18 via the fluid delivery device 11, which can function to control the passage of the fluid to the user. The user can selectively dispense the fluid by interacting with an actuator 38 coupled with a valve 40 that is disposed within an interior 44 of the spigot 14. Additionally, the user can interact with the actuator 38 and dispense the fluid through the fluid delivery device 11 concurrently with the extraction of the fluid from the food item.

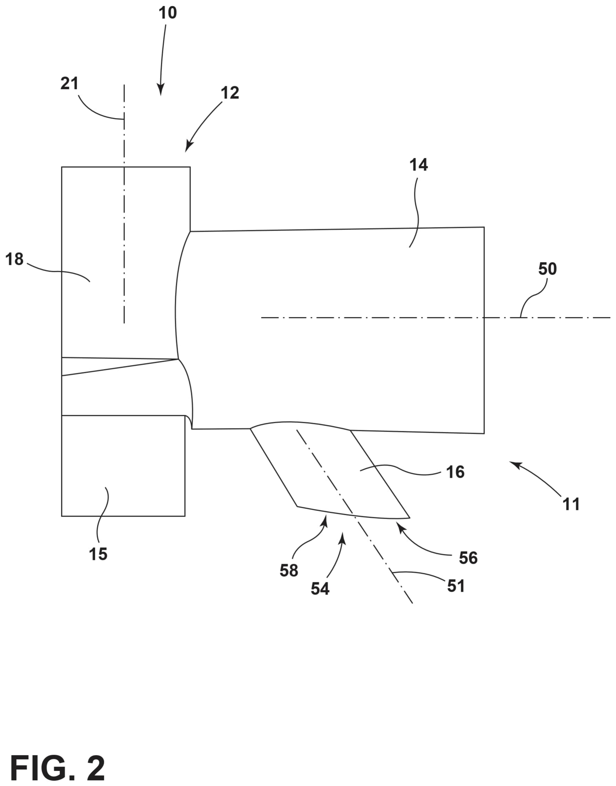

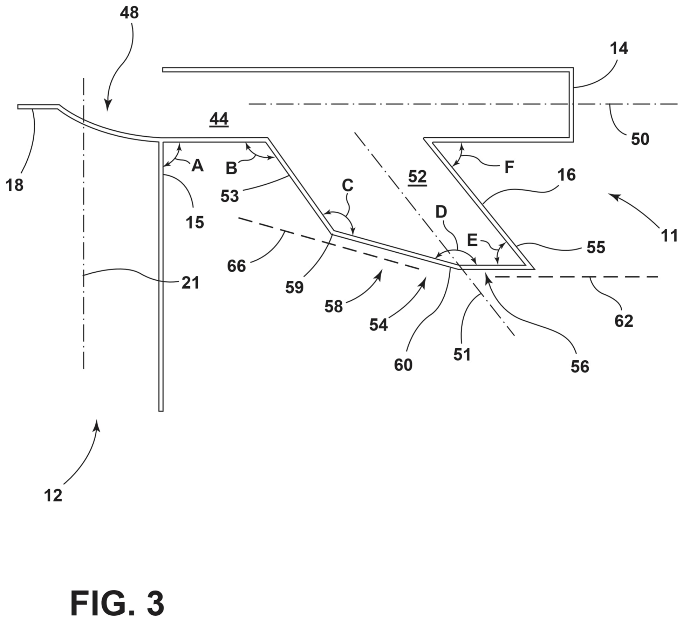

Referring to both FIGS. 1 and 2, the spigot 14 is coupled with the reservoir 18 such that the interior 44 of the spigot 14 is in fluid communication with an interior 46 of the reservoir 18. Specifically, the spigot 14 is aligned with and in fluid communication with a reservoir recess 48 formed at an edge of the collection surface 19 of the reservoir 18. The reservoir recess 48 extends substantially inferior to the collection surface 19, such that the fluid held by the collection surface 19 can flow towards and into the reservoir recess 48. Accordingly, the fluid held by the collection surface 19 of the reservoir 18 can flow into the reservoir recess 48 and then into the spigot 14. In the configuration of the fluid delivery device 11 illustrated in FIG. 2, the spigot 14 extends substantially perpendicular to a longitudinal axis 21 defined by the reservoir 18. Specifically, the spigot 14 defines a lateral axis 50 that can extend substantially perpendicular to the longitudinal axis 21 of the reservoir 18. In the example illustrated in FIG. 3, an angle A between the reservoir 18 and the spigot 14 can be about 88 degrees. However, the angle A can be between about 68 degrees and about 108 degrees.

As shown in FIGS. 2 and 3, the spout 16 is coupled with the spigot 14 and extends toward the bottom of the appliance body 12 at an angle oblique to the lateral axis 50 of the spigot 14. Specifically, the spout 16 extends longitudinally toward the bottom of the appliance body 12 and laterally away from the appliance body 12 to define a longitudinal axis 51 that can be oblique to the lateral axis 50 of the spigot 14. The spout 16 defines a spout interior 52 and a spout aperture 54. Both the spout interior 52 and the spout aperture 54 are in fluid communication with the interior 44 of the spigot 14 and thereby the interior 46 of the reservoir 18. As such, the fluid can flow from the reservoir 18, to the spigot 14, and to the spout 16, wherein the fluid can be delivered to the user via the spout aperture 54 of the spout 16. The user can position a receptacle 80 beneath the spout 16 and aligned with the spout aperture 54 to receive fluid dispensed by the cordless juicer 10.

With reference to FIG. 3, as the fluid flows through the spout 16, the fluid can flow along a rear wall 53 of the spout 16 when a low volume of the fluid is being dispensed from the reservoir 18. The rear wall 53 forms an arcuate section of the spout 16 that is most proximal to the appliance body 12. Accordingly, the rear wall 53 defines an arcuate portion of the spout interior 52 that is most proximal to the appliance body 12. The rear wall 53, as a function of the oblique extension of the spout 16 relative to the spigot 14, defines a slope that extends longitudinally toward the bottom of the appliance body 12 and laterally away from the appliance body 12. Accordingly, the slope defined by the rear wall 53 facilitates the flow of the fluid through the spout interior 52 towards the spout aperture 54. An angle B between the spigot 14 and the rear wall 53 can be oblique, such that the angle B can be between about 91 degrees and 179 degrees. In the configuration illustrated in FIG. 3, the angle B is about 120 degrees. Additionally, the angle F between the spigot 14 and a front wall 55 that forms an opposite arcuate section of the spout 16, relative to the rear wall 53, can be between about 30 degrees and about 89 degrees. In the configuration illustrated in FIG. 3, the angle F is about 58 degrees.

With continued reference to FIG. 3, the spout aperture 54 is disposed at the distal-most portion of the spout 16 relative to the spigot 14 and can have a substantially annular cross-sectional profile. Specifically, the spout 16 can have a substantially oval-shaped cross-sectional profile. The spout aperture 54 is formed by a drip portion 56 of the spout 16 and an oblique portion 58 of the spout 16. Both the drip portion 56 and the oblique portion 58 have a substantially arcuate shape, are positioned between the rear wall 53 and the front wall 55, and cooperate to form the substantially annular cross-sectional profile of the spout aperture 54. Additionally, the drip portion 56 and the oblique portion 58 each partially form an arcuate portion of a rim 60 of the spout 16, and, as such, form the section of the spout 16 positioned vertically inferior to both the rear wall 53 and the front wall 55. The rim 60 circumscribes the spout aperture 54 and forms the distal-most portion of the spout 16 relative to the spigot 14. Moreover, together, the drip portion 56 and the oblique portion 58 cooperate to form the rim 60 of the spout 16. Further, the drip portion 56 can provide substantially one-third of the surface area of the rim 60, and the oblique portion 58 can provide substantially two-thirds of the surface area of the rim 60.

With reference now to FIGS. 2 and 3, the drip portion 56 and the oblique portion 58 define opposing portions of the spout aperture 54. The drip portion 56 defines the distal-most portion of the spout aperture 54 relative to the appliance body 12. The oblique portion 58 defines the proximal-most portion of the spout aperture 54 relative to the appliance body 12. Accordingly, the oblique portion 58 is aligned with the rear wall 53, such that the oblique portion 58 receives fluid as the fluid flows downward from the rear wall 53. The drip portion 56 is aligned with the front wall 55. As shown best in FIG. 3, the rear wall 53 can vertically extend obliquely at an obtuse angle from the oblique portion 58, accordingly, an angle C between the rear wall 53 and the oblique portion 58 can be between about 91 degrees and about 179 degrees. In the example illustrated in FIG. 3, the angle C is about 129 degrees. As shown in the configuration of the spout 16 illustrated in FIG. 3, the front wall 55 can vertically extend obliquely at an acute angle from the drip portion 56. As such, an angle E between the drip portion 56 and the front wall 55 can be between about 30 degrees and about 89 degrees. In the configuration illustrated in FIG. 3, the angle E is about 59 degrees. Additionally, the portion of the rim 60 formed by the drip portion 56 defines a lateral axis 62 that can extend substantially parallel to the lateral axis 50 of the spigot 14.

With continued reference to FIG. 3, the oblique portion 58 can extend towards the appliance body 12 from the drip portion 56 at an angle offset by 10 degrees relative to the drip portion 56. Additionally, the oblique portion 58 can extend towards the appliance body 12 from the drip portion 56 at an angle offset by 8 degrees relative to the drip portion 56. Further, an angle D between the oblique portion 58 and the drip portion 56 can be oblique. As such, the angle D can be between about 91 degrees and about 179 degrees. In the example illustrated in FIG. 3, the angle D is about 170 degrees. Consequently, the portion of the rim 60 formed by the oblique portion 58 extends at an oblique angle, specifically an obtuse angle, relative to the portion of the rim 60 formed by the drip portion 56. Further, as shown in FIG. 3, a lateral axis 66 defined by the portion of the rim 60 formed by the oblique portion 58 can extend obliquely relative to the lateral axis 50 of the spigot 14.

As the oblique portion 58 extends obliquely from the drip portion 56, the oblique portion 58 extends laterally toward the appliance body 12 and longitudinally toward the spigot 14. Accordingly, the oblique portion 58 is vertically superior to the drip portion 56. Stated differently, the oblique portion 58 is more proximal to the spigot 14 than the drip portion 56. As a result, the oblique portion 58 of the rim 60 forms a downward slope as the oblique portion 58 extends toward the drip portion 56 of the rim 60.

One or more portions or the entirety of the rim 60 formed by the oblique portion 58 may be curved, such that one or more portions or the entirety of the oblique portion 58 of the rim 60 deviates from the lateral axis 66. Additionally, the drip portion 56 may form a planar edge, such that the drip portion 56 of the rim 60 is substantially parallel to the lateral axis 62. Additionally, one or more portions or the entirety of the drip portion 56 of the rim 60 may be curved, such that one or more portions or the entirety of the drip portion 56 of the rim 60 deviates from the lateral axis 62.

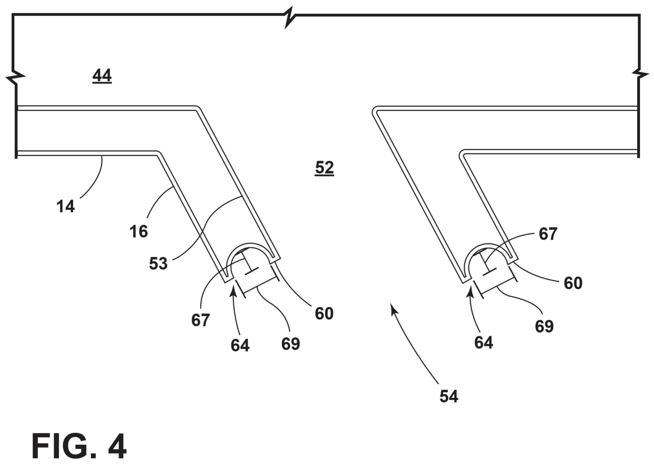

As shown in FIG. 4, a peripheral recess 64 can be formed by the rim 60 of the spout 16, wherein the peripheral recess 64 has a depth 67 and a width 69. The peripheral recess 64 extends about the circumference of the rim 60 and extends vertically upwards towards the spigot 14, thereby defining the depth 67 of the peripheral recess 64. The peripheral recess 64 can form an interconnected ring, such that the peripheral recess 64 extends along substantially the entirety of the circumference of the rim 60. Additionally, the peripheral recess 64 can extend for only a portion of the circumference of the rim 60. The shape of the peripheral recess 64, in cross-section, may be a variety of shapes, including, but not limited to, a semi-circular shape, a triangular shape, or a rectilinear shape. Additionally, the shape of the peripheral recess 64, in cross-section, can change as the peripheral recess 64 extends from the portion of the rim 60 formed by the oblique portion 58 to the portion of the rim 60 formed by the drip portion 56. For example, the peripheral recess 64 can have a semi-circular shape in cross-section while extending across the portion of the rim 60 formed by the oblique portion 58 and a rectilinearly shaped cross-section as the peripheral recess 64 extends across the portion of the rim 60 formed by the drip portion 56.

The depth 67 of the peripheral recess 64 can vary as the peripheral recess 64 extends along the circumference of the rim 60. The depth 67 of the peripheral recess 64 can be greatest at the section of the peripheral recess 64 that extends through the portion of the rim 60 formed by the oblique portion 58. The depth 67 of the peripheral recess 64 can gradually decrease as the peripheral recess 64 extends from the portion of the rim 60 formed by the oblique portion 58 to the portion of the rim 60 formed by the drip portion 56. Additionally, the section of the peripheral recess 64 that extends through the portion of the rim 60 formed by the oblique portion 58 can have a first depth, and the section of the peripheral recess 64 that extends through the portion of the rim 60 formed by the drip portion 56 can have a second depth. The first depth of the peripheral recess 64 can be greater than the second depth of the peripheral recess 64.

Similarly, the width 69 of the peripheral recess 64 can vary as the peripheral recess 64 extends along the circumference of the rim 60. The width 69 of the peripheral recess 64 can be greatest at the section of the peripheral recess 64 that extends through the portion of the rim 60 formed by the oblique portion 58. The width 69 of the peripheral recess 64 can gradually decrease as the peripheral recess 64 extends from the portion of the rim 60 formed by the oblique portion 58 to the portion of the rim 60 formed by the drip portion 56. Additionally, the section of the peripheral recess 64 that extends through the portion of the rim 60 formed by the oblique portion 58 can have a first width, and the section of the peripheral recess 64 that extends through the portion of the rim 60 formed by the drip portion 56 can have a second width. The first width of the peripheral recess 64 can be greater than the second width of the peripheral recess 64.

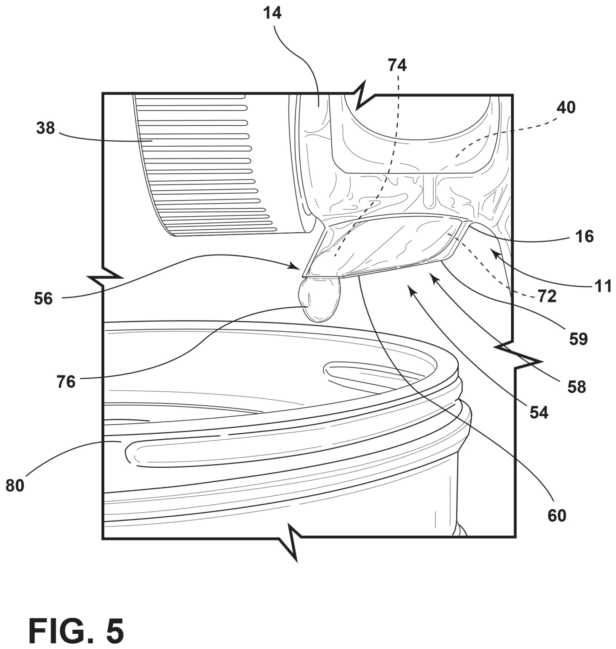

As shown in FIGS. 3 and 5, in operation, the fluid delivery device 11 is configured to control the flow of the fluid to substantially inhibit the passage of fluid out of the oblique portion 58 of the spout aperture 54, particularly, when the flow of fluid has a low velocity. Specifically, the rear wall 53 and the oblique portion 58 cooperate to guide the fluid from the oblique portion 58 to the drip portion 56 of the spout 16. The fluid can have a low velocity as a result of a low quantity of fluid within the reservoir 18. Alternatively, the fluid can have a low velocity as a result of a decrease in pressure exerted on the fluid as it flows from the reservoir 18. Specifically, an obstruction, such as pulp produced when juice is extracted from fruit by the reamer 20, within the reservoir recess 48 that impedes the flow of fluid can decrease the pressure exerted on the fluid, and thereby cause a decrease in the velocity of the fluid flowing to the spigot 14 from the reservoir 18.

With continued reference to FIGS. 3 and 5, when fluid flowing to the fluid delivery device 11 from the reservoir 18 has a low velocity, the fluid can pass into the spout interior 52 and begin to flow along the portion of the rear wall 53 that faces the spout interior 52 towards the spout aperture 54. As the fluid flows along the rear wall 53 of the spout 16, the velocity of the fluid is controlled as a function of the oblique extension of the rear wall 53 from the spigot 14, or in other words, the degree of the angle B. As such, the steepness of the slope defined by the rear wall 53 can be at least partially determinative of the velocity of the fluid as it flows against the rear wall 53. More particularly, the oblique extension of the rear wall 53 can allow for adhesive forces between the rear wall 53 and the fluid, along with cohesive forces amongst the water molecules that comprise the fluid, to restrict the velocity of the fluid flowing against the rear wall 53. As such, the velocity of the fluid flowing through the spout 16 can be controlled, at least partially, as a function of the angle B.

When the fluid reaches the portion of the spout aperture 54 formed by the oblique portion 58, the fluid can be controlled such that the adhesive forces between the fluid and the oblique portion 58 of the spout 16 and the cohesive forces amongst the water molecules of the fluid are sufficient to overcome the force of gravity. Specifically, the velocity of the fluid can be limited by the oblique extension of the rear wall 53, such that the adhesive and the cohesive forces can substantially inhibit the flow of the fluid out of the portion of the spout aperture 54 formed by the oblique portion 58. Accordingly, in some instances, the fluid can be suspended across the portion of the spout aperture 54 formed by the oblique portion 58. Accordingly, an accumulation of fluid 72 can be formed at the oblique portion 58, and more specifically, the accumulation of fluid 72 can be formed at a collection region 59 of the oblique portion 58.

As shown in FIG. 5, the collection region 59 can be a section of the oblique portion 58 that is most proximal to the rear wall 53 and can be the section of the oblique portion 58 that contacts the rear wall 53. As such, the collection region 59 is the region of the oblique portion 58 that the fluid first contacts as the fluid flows from the rear wall 53 to the oblique portion 58. As such, the adhesive forces between the oblique portion 58 and the fluid and the cohesive forces amongst the water molecules of the fluid result in the formation of the accumulation of fluid 72 at the collection region 59. However, the accumulation of fluid 72 may also collect partially past the boundaries of the collection region 59.

When a sufficient amount of fluid has accumulated at the collection region 59, the force of gravity will, at least partially, overcome the adhesive and the cohesive forces and cause at least a portion of the fluid to begin to flow along the downward slope of the oblique portion 58 to the drip portion 56. Specifically, the interplay between the force of gravity and the adhesive and cohesive forces creates a periodic flow of the fluid, or periodic drips of the fluid, from the collection region 59 toward the drip portion 56.

With reference again to FIGS. 3 and 5, as the fluid flows down the downward slope of the oblique portion 58, the fluid movably adheres to the oblique portion 58 as a result of the adhesive forces between the fluid and the oblique portion 58 and the cohesive forces amongst the water molecules of the fluid. The oblique extension of the oblique portion 58, or in other words, the degree of angle C and the degree of angle D, can limit the velocity of the fluid flowing across the oblique portion 58 towards the drip portion 56, thereby allowing the adhesive forces between the fluid and the oblique portion 58 and the cohesive forces amongst the water molecules of the fluid to maintain the adherence of the fluid to the oblique portion 58. However, these adhesive and cohesive forces are partially overcome by the force of gravity, allowing the fluid to flow, albeit controlled by the adhesive and cohesive forces, down the downward slope of the oblique portion 58 to the drip portion 56. Consequently, a majority of the fluid is substantially inhibited from flowing directly from the oblique portion 58 out of the spout aperture 54, which substantially inhibits an undesired passage, or drip, of the fluid from the spout 16. Additionally, once fluid has escaped the collection region 59, the fluid is substantially inhibited from flowing back to the collection region 59. However, in some instances, fluid, particularly viscous fluid, can flow back to the collection region 59 after having passed from the collection region 59 and at least partially down the oblique portion 58.

With continued reference to FIGS. 3 and 5, when the fluid reaches the drip portion 56 of the spout aperture 54, the velocity of the fluid has been controlled by the oblique portion 58 to allow the adhesive forces between the drip portion 56 and the fluid and the cohesive forces amongst the water molecules of the fluid to overcome the force of gravity. Consequently, this results in an accumulation of fluid 74 at the drip portion 56. However, a periodic flow of fluid, or an intermittent drip, occurs as the weight of the accumulation of fluid 74 at the drip portion 56 increases, thereby permitting the force of gravity to overcome the adhesive and cohesive forces. This allows for the accumulation of fluid 74 at the drip portion 56 to periodically flow, or, in other words, to intermittently produce drops of fluid 76 that pass from the drip portion 56 through the portion of the spout aperture 54 formed by the drip portion 56 and into the receptacle 80 provided by the user.

With reference now to FIGS. 4 and 5, additional adhesive forces can exist between the fluid that flows across the oblique portion 58 and the drip portion 56 and the rim 60 of the spout 16. The adhesive force can exist when a portion of the fluid extends or overhangs a portion of the rim 60. The adhesive force between the fluid and the rim 60 can provide an additional force to control the flow of the fluid as the fluid flows from the oblique portion 58 to the drip portion 56.

When the peripheral recess 64 is formed in the rim 60 of the spout 16, the peripheral recess 64 provides the rim 60 with additional surface area, thereby improving the strength of the adhesive forces between the rim 60 and the fluid. As such, increasing the surface area provided by the peripheral recess 64 by increasing the width 69 and/or the depth 67 of the peripheral recess 64 can strengthen the adhesive forces between the fluid and the rim 60. Additionally, the flow of the fluid from the oblique portion 58 to the drip portion 56 and then to the receptacle 80 of the user can be facilitated by a gradual decrease in the surface area provided by the peripheral recess 64 as the peripheral recess 64 extends from the oblique portion 58 to the drip portion 56.

It will be understood that the fluid delivery device 11, as described herein, can be applied to systems other than a cordless juicer 10. The fluid delivery device 11 may be employed in any appliance or system that can utilize a spigot and spout arrangement to dispense a fluid, and particularly in appliances or systems that benefit from the elimination of drippage when a dispensing fluid has a low velocity. Such systems may include fuel delivery systems, industrial applications, and pharmaceutical applications, among others.

The fluid delivery device 11 of the present disclosure may provide a variety of advantages, including, but not limited to, the following. By providing a geometry that is capable of controlling the flow of a fluid through the spout 16, the fluid delivery device 11 can substantially reduce the amount of fluid that undesirably drips from the spout aperture 54. Particularly, the geometry of the fluid delivery device 11 functions to substantially promote the passage of fluid out of the portion of the spout aperture 54 formed by the drip portion 56. Consequently, a majority of the fluid that enters the spout interior 52 passes through the portion of the spout aperture 54 positioned furthest from the appliance body 12. Accordingly, the user can utilize a receptacle 80 that has a upwardly tapered profile, such as a mason jar, to receive fluid dispensed by the cordless juicer 10, as a top opening of the receptacle 80 can be positioned beneath the portion of the spout aperture 54 formed by the drip portion 56, notwithstanding that the top opening of the receptacle is disposed inwards of an exterior of a body of the receptacle 80. As such, the fluid delivery device 11 of the present disclosure can function to substantially reduce inadvertent drippage of fluid from the spout aperture 54, thereby reducing the cleaning time that can be required of the user and facilitating an efficient reception of fluid by the user.

The invention disclosed herein is further summarized in the following paragraphs and is further characterized by combinations of any and all of the various aspects described therein.

According to one aspect of the present disclosure, an appliance has an appliance body that includes a base and a reservoir removably coupled with the base and configured to receive fluid extracted from a food item by a reamer coupled with a rotatable shaft that extends from the base, and a fluid delivery device that includes a spigot coupled to the reservoir, and a spout coupled to the spigot and configured to deliver the fluid received by the reservoir that flows to the spout via the spigot, wherein the spout defines a spout interior and includes a rear wall that defines a portion of the spout interior, a front wall that defines a portion of the spout interior opposite the rear wall, and a spout aperture disposed at the distal-most portion of the spout relative to the spigot, wherein the spout aperture is formed of an oblique portion of the spout and a drip portion of the spout that cooperates with the oblique portion to form a rim of the spout, and wherein the oblique portion defines the proximal most portion of the spout aperture relative to the appliance body and the drip portion defines the distal-most portion of the spout aperture relative to the appliance body, and wherein the oblique portion extends at an oblique angle from the drip portion to control a flow of the fluid delivered from the spout via the spout aperture.

According to another aspect of the present disclosure, an angle between the spigot and the rear wall is between 110 degrees and 130 degrees.

According to another aspect of the present disclosure, an angle between the rear wall and the oblique portion is between 110 degrees and 130 degrees.

According to another aspect of the present disclosure, an angle between the drip portion and the front wall is between 50 degrees and 70 degrees.

According to another aspect of the present disclosure, an angle between the spigot and the front wall is between 50 degrees and 70 degrees.

According to another aspect of the present disclosure, a portion of the rim formed by the oblique portion extends obliquely to a lateral axis of the spigot and a portion of the rim formed by the drip portion extends parallel to the lateral axis of the spigot.

According to another aspect of the present disclosure, an angle between the oblique portion and the drip portion is 170 degrees.

According to another aspect of the present disclosure, the portion of the spout aperture formed by the oblique portion is positioned vertically superior to the portion of the spout aperture formed by the drip portion.

According to another aspect of the present disclosure, the drip portion forms one-third of a surface area of the rim, and the oblique portion forms two-thirds of the surface area of the rim.

According to another aspect of the present disclosure, the appliance is a cordless juicer and has a battery removably coupled with the appliance body.

According to another aspect of the present disclosure, the fluid delivery device is configured to control the flow of the fluid such that the fluid periodically flows from the portion of the spout aperture formed by the drip portion.

According to yet another aspect of the present disclosure, a cordless juicer has an appliance body that includes a base and a reservoir removably coupled with the base and configured to receive fluid extracted from a food item by a reamer coupled with a rotatable shaft that extends from the base, a battery removably coupled to the appliance body, and a fluid delivery device that includes a spigot coupled to the reservoir, and a spout coupled to the spigot and configured to control a delivery of fluid received by the reservoir that flows to the spout via the spigot, wherein the spout defines a spout aperture that is formed by an oblique portion of the spout and a drip portion of the spout, wherein an angle between the oblique portion and the drip portion is oblique.

According to another aspect of the present disclosure, the angle between the oblique portion and the drip portion is between 160 degrees and 179 degrees.

According to another aspect of the present disclosure, the angle between the oblique portion and the drip portion is 170 degrees.

According to another aspect of the present disclosure, the oblique portion and the drip portion cooperate to form a rim of the spout, wherein the rim defines a peripheral recess that extends along a circumference of the rim.

According to another aspect of the present disclosure, a width of the peripheral recess gradually decreases as the peripheral recess extends from a portion of the rim formed by the oblique portion to a portion of the rim formed by the drip portion.

According to another aspect of the present disclosure, a depth of the peripheral recess gradually decreases as the peripheral recess extends from a portion of the rim formed by the oblique portion to a portion of the rim formed by the drip portion.

According to yet another aspect of the present disclosure, a fluid delivery device configured to deliver a fluid has a spigot and a spout, wherein the spigot is configured to couple to an appliance body of an appliance to receive a fluid from the appliance body and the spout is configured to deliver the fluid from the spigot to a user via a spout aperture defined by the spout, wherein the spout aperture is formed from an oblique portion of the spout and a drip portion of the spout, wherein an angle between the oblique portion and the drip portion is between 160 degrees and 179 degrees, and wherein the spout has a rim that defines a peripheral recess that has a width that gradually decreases as the peripheral recess extends from a portion of the rim formed by the oblique portion to a portion of the rim formed by the drip portion.

According to another aspect of the present disclosure, the spout extends at an oblique angle relative to a lateral axis of the spigot.

According to another aspect of the present disclosure, the spout has a rear wall that defines a portion of the spout interior that is proximal to the appliance body when the fluid delivery device is coupled to an appliance, wherein an angle between the rear wall and the oblique portion is between 120 degrees and 140 degrees.

It will be understood by one having ordinary skill in the art that the construction of the described disclosure and other components is not limited to any specific material. Other exemplary embodiments of the disclosure disclosed herein may be formed from a wide variety of materials, unless described otherwise herein.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

It is also important to note that the construction and arrangement of the elements of the disclosure, as shown in the exemplary embodiments, is illustrative only. Although only a few embodiments of the present innovations have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements shown as multiple parts may be integrally formed, the operation of the interfaces may be reversed or otherwise varied, the length or width of the structures and/or members or connector or other elements of the system may be varied, the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present innovations. Other substitutions, modifications, changes, and omissions may be made in the design, operating conditions, and arrangement of the desired and other exemplary embodiments without departing from the spirit of the present innovations.

It will be understood that any described processes or steps within described processes may be combined with other disclosed processes or steps to form structures within the scope of the present disclosure. The exemplary structures and processes disclosed herein are for illustrative purposes and are not to be construed as limiting.

## Claims

1. An appliance (10), comprising:
an appliance body (12), comprising:
a base (15); and
a reservoir (18) removably coupled with the base (15) and configured to receive fluid extracted from a food item by a reamer (20) coupled with a rotatable shaft (24) that extends from the base (15); and
a fluid delivery device (11), comprising:
a spigot (14) coupled to the reservoir (18); and
a spout (16) coupled to the spigot (14) and configured to deliver the fluid received by the reservoir (18) that flows to the spout (16) via the spigot (14), wherein the spout (16) defines a spout interior (52) and comprises:
a rear wall (53) that defines a portion of the spout interior (52);
a front wall (55) that defines a portion of the spout interior (52) opposite the rear wall (53); and
a spout aperture (54) disposed at the distal-most portion of the spout (16) relative to the spigot (14), wherein the spout aperture (54) is formed by:
an oblique portion (58) of the spout (16); and
a drip portion (56) of the spout (16) that cooperates with the oblique portion (58) to form a rim (60) of the spout (16), and wherein the oblique portion (58) defines the proximal most portion of the spout aperture (54) relative to the appliance body (12) and the drip portion (56) defines the distal-most portion of the spout aperture (54) relative to the appliance body (12), and wherein the oblique portion (58) extends at an oblique angle from the drip portion (56) to control a flow of the fluid delivered from the spout (16) via the spout aperture (54).

2. The appliance (10) of claim 1, wherein an angle between the spigot (14) and the rear wall (53) is between 110 degrees and 130 degrees.

3. The appliance (10) of either claim 1 or claim 2, wherein an angle between the rear wall (53) and the oblique portion (58) is between 110 degrees and 130 degrees.

4. The appliance (10) of any one of claims 1 to 3, wherein an angle between the drip portion (56) and the front wall (55) is between 50 degrees and 70 degrees.

5. The appliance (10) of any one of claims 1 to 4, wherein an angle between the spigot (14) and the front wall (55) is between 50 degrees and 70 degrees.

6. The appliance (10) of any one of claims 1 to 5, wherein a portion of the rim (60) formed by the oblique portion (58) extends obliquely to a lateral axis (50) of the spigot (14) and a portion of the rim (60) formed by the drip portion (56) extends parallel to the lateral axis (50) of the spigot (14).

7. The appliance (10) of any one of claims 1 to 6, wherein an angle between the oblique portion and the drip portion is between 160 degrees and 179 degrees.

8. The appliance (10) of any one of claims 1 to 7, wherein an angle between the oblique portion (58) and the drip portion (56) is 170 degrees.

9. The appliance (10) of any one of claims 1 to 8, wherein the portion of the spout aperture (54) formed by the oblique portion (58) is positioned vertically superior to the portion of the spout aperture (54) formed by the drip portion (56).

10. The appliance (10) of any one of claims 1 to 9, wherein the drip portion (56) forms one third of a surface area of the rim (60) and the oblique portion (58) forms two thirds of the surface area of the rim (60).

11. The appliance (10) of any one of claims 1 to 10, wherein said appliance (10) is a cordless juicer and further comprises:
a battery (13) removably coupled with the appliance body (12).

12. The appliance (10) of any one of claims 1 to 11, wherein the fluid delivery device (11) is configured to control the flow of the fluid such that the fluid periodically flows from the portion of the spout aperture (54) formed by the drip portion (56).

13. The appliance (10) of any one of claims 1 to 12, wherein the rim (60) defines a peripheral recess (64) that extends along a circumference of the rim (60).

14. The appliance (10) of claim 13, wherein a width (69) of the peripheral recess (64) gradually decreases as the peripheral recess (64) extends from a portion of the rim (60) formed by the oblique portion (58) to a portion of the rim (60) formed by the drip portion (56).

15. The appliance (10) of either claim 13 or claim 14, wherein a depth (67) of the peripheral recess (64) gradually decreases as the peripheral recess (64) extends from a portion of the rim (60) formed by the oblique portion (58) to a portion of the rim (60) formed by the drip portion (56).
